**Europäisches Patentamt**

**European Patent Office**

**Office européen des brevets**

(19)

(11) Publication number: **0 070 954**
**A2**

# (12) EUROPEAN PATENT APPLICATION

(21) Application number: **81830101.2**

(22) Date of filing: **22.06.81**

(51) Int. Cl.³: **A 45 F 1/06**
**A 45 B 11/00**

(43) Date of publication of application:
**09.02.83 Bulletin 83/6**

(84) Designated Contracting States:
**AT CH DE FR GB IT LI**

(71) Applicant: **Gandini, Luciano**
**Via Varelio**
**I-40100 Bologna(IT)**

(72) Inventor: **Gandini, Luciano**
**Via Varelio**
**I-40100 Bologna(IT)**

(74) Representative: **Sassatelli, Franco**
**c/o INIP Ufficio Internazionale Brevetti per Deposito di**
**Brevetti e Marchi via Mazzini, 170**
**I-40139 Bologna(IT)**

(54) Screening device for sun rays with changing positioning and orientating.

(57) The patent foresees the stationing in a pleasant position, on the car top by means of transversal guides that can be made integral with it, of an emplacement bearing in the centre a parasol by means of coupling. By changing the position of the guides on the car top and of the emplacement on them, the most agreable positioning of the parasol can be obtained.

The sunshade stem forsees an articulated joint immediately above the coupling part, permitting thus to change the parasol orientation. By adjusting in this way the emplacement positioning and the stem orienting, the adjustment of the device is obtained to the contingent employ requirements.

In order to get the composition of the stem integral with the emplacement in the wished position, the coupling axial cylinder forsees, on the circumference, a spaced set of bore couples which, laid on the portable diameters in position by rotation, separately correspond with a couple of bores on the coaxial to insert, permitting in this way to introduce a locking means by clamping.

- I -

"Screening device for sun rays with changing positioning and o-
rienting.

The invention refers to a parasol device,with variable positioning on the car top and which can be differently oriented on the
supporting stem to allow the position adjustment to the contingent employ requirements.the invention mainly permits to determine a screening device for the sun rays and to avoid in this
way the car body overheating and,therefore,the driver discomfort
as well as the relevant wear of car structures with an exceeding
fuel evaporation.By further orienting the sunshade partly on the
car and partly on the adjacent space,this one can be put under
the shade thus permitting to use the parasol for protection in
the open air for people and with possible employ of camping implements.

The protection of motor cars from the sun rays is at present possible but in stop stations conveniently equipped or by taking
advantage of casual protections,such as those offered by trees
and building parts.The invention permits to equip the car with
a lodgeable accessory when not in use,in the ordinary space of
the luggage boot,to be quickly mounted on the car top and positioned and oriented,in employ station,by means of simple mnemonic operations,thus permitting to stop the car in any place wha
tever.

The sunshade presence,in fact,enables to screen the sun rays
and the ventilation of the interspace avoiding the car body o-

-verheating.

Substantially,the means foresees a couple of parallel guides transversally laid and immediately above the car top,to be made integrally operating with it by means of conventional quick coupling devices on the side reliefs,which therefore act as longitudinal gu ides for the choice of their positioning points.These guides bear an emplacement with transversal sliding equipped with locking means for fixing them in stationing position.

The emplacement can thus be brought by sliding on the two above me ntioned couples of orthogonal guides in the chosen position of employ.This emplacement foresees centrally a cylindrical body in ele vation suitable for operation as coaxial for coupling the correspo nding axial part of the screen rod,which is thus brought by insertion in employ position.

As a choice version,the parasol stem foresees,in a position immediately above it,the axial part of the clutch,an articulation per mitting to turn and change the screen orientation.In this way,by properly adjusting the emplacement stationing point and the rod orientation,the screening device can be arranged according to the contingent requirements of employ.The integrally operating composition of the screen with the emplacement can be obtained by means of a clamping device passing through the locking parts of the clutch.The device is thus stabilized in the chosen position for employ and the parts are anchored which moreover operates with antitheft effect.To permit the variability of the anchoring position,the clutch axial cylinder foresees a spaced set of bore couples on a circumference,positioned on the diameter,to be brought into position by turning;the bores are foreseen to correspond coplanarly to the coaxial to insert,in order to obtain the integral locking of the parts by a through clamping means.

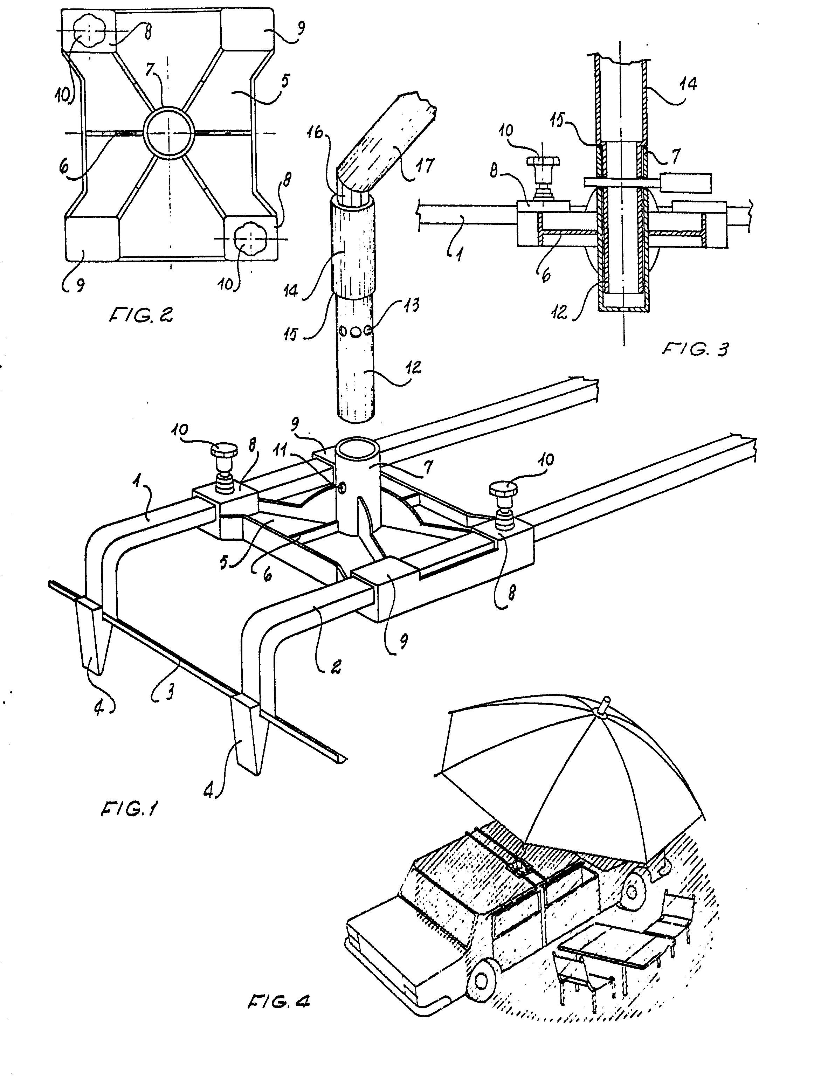

A not limiting version of execution for this procedure is illustrated by the drawings of Table I,where Fig.I is a partial view of the transversal guides represented as supported on one side,on quick clutch devices and bearing the emplacement,showing the initial part of the rod equipped with articulation and locking bores in station in pre-inserting position.Fig.2 is the view from above of the emplacement showing the two couples of gliding bodies,two of which equipped with screew locking knobs for settling the emplacement on the transversal guides.Fig.3 is the longitudinal section of the emplacement bearing the stem in locked condition.These parts are connected by means of a padlock.Fig. 4 is the explanatory representation of the invention employ possibilities and illustrates a motor car stationary with a mounted parasol oriented so as to determine a shadow zone used to shield the car body and a portion of ground to permit the stop in a shadowed zone for persons and things.For stationing,as a version,transversal guides I and  2 are foreseen,firmly fitted on the car side reliefs 3 by conventional quick connection joints.Emplacement 5 employs a system of ribs 6 for strengthening and central cylindrical part 7 which operates as a clutching coaxial and two couples 8 and 9  of containing parts for the emplacement gliding on the guides,of which 8 is equipped with screwed knobs permitting to lock the emplacement when the car is stationary.On coaxial part 7,two bores II are foreseen.The screen rod foresees initial cylindrical part I2 for insertion equipped with bore system I3 and,above it;part I4 with a larger diameter so as its crown I5 hits in composition on the edge of part 7.The stem is fitted with articulation I6 and the subsequent raised part I7 using some further articulation,if required.In particular,the parasol is foreseen in any possible form,such as round,rectangular,square,hexagonal,octagonal etc.The shadow projection can be adjusted to the type of the screen form used by adapting the number of the scale bore couples foreseen on the insertion body to the one of

**0070954**

the parasol sides.In this way,a hexagonal screen could require a scale with six bore couples,permitting thus six positions with slanting rod and a seventh one with vertical stem.For the integral operating clutch,the use of a padlock has been foreseen(I8).Practically,the execution particulars,for which the form of the transversal guides and of the couplings,the emplacement;the rod and the parasol may be differently carried out.

Moreover,an employ variety for materials and accessories has been foreseen.

Claims:

1)Screening device for sun rays with changing positioning and orienting,characterized by the fact that an equipment with li mited size is employed,which can be stored,when not used,in the car luggage boot and quickly mounted on the car top.A couple of parallel guides to be set transversally on the vehicle top, by means of conventional quick insertion couplings on the si de reliefs,is employed.These guides bear an emplacement equip ped with locking device for fixing it when the car is station ary.By sliding on the said two couples of orthogonal guides, the emplacement is brought in the position chosen for employ.

2)Screening device for sun rays with changing positioning and orienting,according to the previous claim,characterized by the fact that the emplacement centrally employs a cylindrical pa rt which operates as a coaxial for settling the parasol stem.

3)Screening device for sun rays with changing positioning and orienting,according to the above claims,characterized by the fact that an articulation is foreseen on the stem in the po sition immediately above the axial part with the smallest co upling diameter,so that by rotation the parasol orientation can be changed as well as the resulting shadowed zone.

4)Screening device for sun rays with changing positioning and orienting,according to the above claims,characterized by the fact that the composition integrally operating of the parasol with the emplacement can be obtained by means of a through tr ansversal clampting device in the two coaxial components of co upling.

5)Screening device for sun rays with changing positioning and orienting,according to the above claims,characterized by the fact that,in order to obtain a variable slanting of the para

sol,the clutching axial body foresees a spaced set of bore couples on the circumference diameter,so that by turning the stem, the bores can be successively brought in correspondence with bore couple on the diameter in a similar way foreseen on the coupling coaxial piece.The insertion of the locking body makes thus the parasol integrally operating with the settling emplacement.

6)Screening device for sun rays with changing positioning and orienting,according to the previous claims,characterized by the fact that,in a version,the transversal guides I and 2 are fitted in the wished position on the car top by means of the quick clutch joints 4 on reliefs 3.The emplacement 5 settling is characterized by the radial and containment system of outside ribs 6 with central coaxial 7 and can be obtained by gliding in the two couples of containing guides 8 and 9 and by position locking by means of the two screwed knobs I0.

7)Screening device for sun rays with changing positioning and orienting,according to the previous claims,characterized by the fact that the parasol rod can be integrally fitted by inserting part I2 of coaxial 7 and subsequently by inserting the locking body with padlock I8 into bores II passing into borencouple I2 of the axial insertion body.

8)Screening device for sun rays with changing positioning and orienting,according to the previous claims,characterized by the fact that the parasol stem is foreseen with initial cylindrical insertion part I2 and above it part I4 with larger diameter to let its crown I5 hit in composition on the edge of part 7

9)Screening device for sun rays with changing positioning and orienting,according to the previous claims,characterized by the fact that to permit to change the orientation of the screen rod,

**0070954**

the insertion part I2 is foreseen with many coplanar bores I3 on diameter in order to get the insertion of the locking body by rotating the stem which permits to bring the bores II in coorespondence with the chosen bore couple.

I0)Screening device for sun rays with changing positioning and orienting,according to the previous claims,characterized by the fact that an execution version is foreseen to the drawings of Table I in order to shelter a car and also persons and things, if wished,for particular employ on stay in shade of person and things.

On behalf.

0070954

FIG. 2

FIG. 3

FIG. 1

FIG. 4